# EUROPEAN PATENT APPLICATION

(11) **EP 1 439 699 A1**
(43) Date of publication of application: **21.07.2004**
(21) Application number: 02406117.8
(22) Date of filing: 19.12.2002
(51) Int. Cl.: H04N 7/24

(54) **Arrangement for distributing digital video program information**

(71) Applicant: ABB Research Ltd, 8050 Zürich (CH)
(72) Inventor: Skaalvik, Jonny, N-1385 Asker (NO); Dzung, Dackfey, 5430 - Wettingen (CH); Aakvaag, Niels, 1362 Hosle (NO); Lokstad, Trond, 1450 - Nesoddtangen (NO)
(74) Representative: ABB Patent Attorneys

(57) **Abstract**

The invention is concerned with a bandwidth optimized arrangement for distributing digital video program information over large sites such as office buildings or hotels which are equipped with a digital data network of the Ethernet type. Any Ethernet switch or hub (31,31') in the centre of a star type horizontal Ethernet network (32,32') is combined with an MPEG demultiplexer or switch (21,21') which decouples a limited number of video programs from a video program streaming channel (20). These programs are then transmitted over the Ethernet to end users. The vertical Ethernet backbone network (30) interconnecting the Ethernet switches (31,31') is thus freed from video traffic.

## Description

### FIELD OF THE INVENTION

The invention relates to the field of on-site multimedia or data digital networks. It is concerned with an arrangement for distributing digital video program information as described in the preamble of claim 1.

### BACKGROUND OF THE INVENTION

Today, the most common method for video distribution is by analogue modulation per program and frequency division multiplexing on a wideband coaxial cable, where a number of programs are distributed in parallel to all subscribers. In practice, the number of programs that can be distributed in parallel is limited for technical reasons and is well below the number of available programs.

In order to reduce the number of programs distributed in parallel, one has come to believe that the way forward would go through video switching, whereby the parallel distribution would not go all the way to the actual subscriber, but only within the backbone of the distribution network. The end user would command the nearest switch to distribute only one or a limited number of programs to that particular user, thus reducing the need to provide full capacity throughout the entire distribution network. This would even pave the way for serving the user full Video-On-Demand (VOD).

In the Patent Application US 2002/0007494 A an interactive television system based on advanced digital receivers, so-called set-top boxes, capable of receiving and displaying compressed data streams using MPEG encoding is shown. MPEG encoding or compression is a standard developed by the Moving Pictures Expert Group. A content server and/or a satellite control computer receiving video program information from a satellite produce an Ethernet stream for transmission to an encoder over a digital communications link. The encoder converts the Ethernet format data frames to MPEG-2 data-bit streams which are transmitted via a diplexor to a multitude of distant set-top boxes located at subscriber locations. The encoder additionally provides logical linkage to the internet and serves to establish a data format, i.e. MPEG-2 bit streams, which can be read by existing digital set-top boxes, even though the input sources may be varied and incompatible with the set-top box if used directly. The physical link between the encoder and the subscriber may be a coaxial cable, a fibre optic cable, a radio link or any other well-known digital distribution facilities.

As a different example of integrating digital video distribution with data networks, the UK Patent Application GB 2 359 702 A discloses an Ethernet-based home network architecture interconnecting devices via a network interface unit to external networks. Conventional analogue broadcast signals or mixed digital/analogue signals and other types of signals such as ISDN, ADSL or broadcast/digital satellite service are carried on external networks to the interface units. Multiple interface units together with a multi-port switched hub form an entrance unit which is located in a utility area of the house. From the hub, a star topology type internal network, as defined by Ethernet 100base-T, connects to PCs and set-top boxes. At least one network interface unit is capable of demultiplexing from an incoming multiple program MPEG video data stream into a single program transport stream and of performing a MPEG clock recovery. Set-top electronics comprise a network-to-MPEG synthesizer for regeneration of the MPEG clock enabling conversion of the compressed video signal to real video and display of the latter on a TV.

The above home network architecture comprises only one Ethernet switch serving a star type internal network and was provided for networks located in individual homes. However, larger networks involving several Ethernet switches as found in larger premises such as office buildings or hotels with several floors are not discussed.

### DESCRIPTION OF THE INVENTION

It is therefore an objective of the invention to create a bandwidth optimized network architecture for distributing a selection of digital video or multimedia programs in a building which is equipped with a digital data network. This objective is achieved by an arrangement for distributing digital video program information according to claim 1. Preferred embodiments are evident from the dependent patent claims.

According to the invention, in larger premises such as office buildings or hotels with several floors and/or star type horizontal Ethernet networks centred around an Ethernet switch or hub, existing or planned Ethernets are modified by adjoining an MPEG demultiplexer or switch to each Ethernet switch. The MPEG demultiplexer decouples a limited number of video programs from a video program streaming channel, which programs are then transmitted over the Ethernet to end users.

In a preferred variant of the invention, the star type horizontal Ethernet networks are connected to TV-sets via set-top boxes which can reconvert incoming TCP/IP data frames to an MPEG data stream and display the latter on the screen of the TV-set. In case several, as opposed to only one single, video programs are transmitted to the subscriber over the Ethernet in parallel, said programs may be displayed on a TV-screen in distinct sub-windows.

### BRIEF DESCRIPTION OF THE DRAWINGS

The subject matter of the invention will be explained in more detail in the following text with reference to preferred exemplary embodiments which are illustrated in the attached drawing, in which:

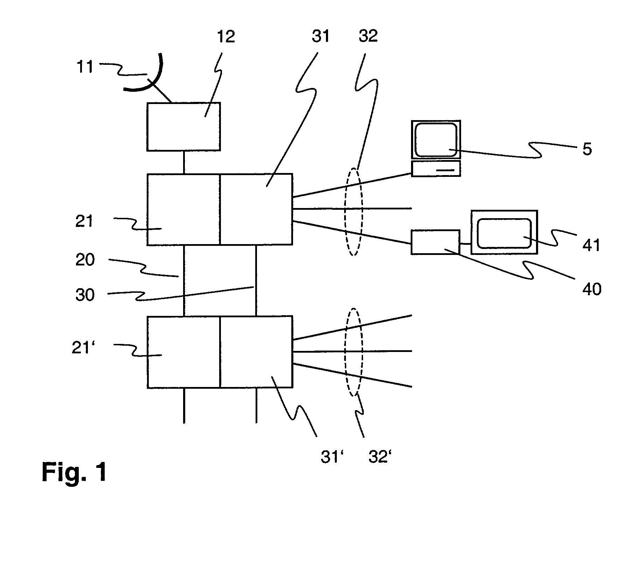

Fig.1 schematically shows an arrangement for distributing digital video program information according to the invention.
The reference symbols used in the drawing, and their meanings, are listed in summary form in the list of reference symbols.

### DETAILED DESCRIPTION OF PREFERRED EMBODIMENTS

In digital satellite distribution systems, the video streaming transport is organised in that many programs are time-multiplexed onto an MPEG Transport Stream (MPEG-TS) and modulated onto a frequency carrier. The transmission spectrum is divided into frequency bands, each band carrying an MPEG-TS. The bit rate for one MPEG-TS, after demodulation and removal of error-protection information, is approximately 80 Mbit/s on a continuous basis. Typically, a standard, i.e. not high-resolution TV signal requires in the order of 5 Mbit/s, thus, 10-15 TV programs can in principle be encoded in one MPEG-TS.

In Fig.1 the digital satellite distribution system 1 comprises a satellite antenna 11 which receives video program information from a satellite via an ultra-high frequency data link. A demodulator bank 12 operates together with a multiplexer, thus allowing the transmission of say 100 MPEG-TSs on the same physical line. Alternatively, said MPEG-TSs may originate from a video content server.

A digital data network 3 internal to a site such as a building or a hotel comprises star type horizontal networks 32,32' around a central data switch or hub 31,31'. Several of the foregoing central switches 31,31' are connected by a vertical backbone network 30. In terms of Ethernet, the era of 10 Mbit/s coax-based Ethernet networks is coming to a close, being replaced by 100 Mbit/s category-5 twisted-pair switched networks (100base-T). 1 Gbit/s fiber-optic based networks exist, but are not extensively used, whereas 10 Gbit/s links, which are particularly interesting for backbone networks, are expected to arrive within the next years. Until then, an Ethernet backbone network of a 1 Gbit/s type carrying the equivalent of 10 MPEG-TS of video information in parallel will be very busy and lowering the capacity for other types of data by a large factor.

Therefore, all Ethernet switches 31,31' are connected to - or have built-in - MPEG-TS demultiplexers or switches 21,21'. The vertical lines between these indicate a vertical highspeed network or video program streaming channel 20 which is connected to the digital satellite distribution system 1 or any other source of video information, and in which all the incoming MPEG-TSs are multiplexed together. With two dedicated vertical networks 20,30 for different data types, i.e. the video program streaming channel 20 for digital video and the Ethernet backbone network 30 for TCP/IP, no bandwidth problems will arise. The task of demultiplexing the multitude of MPEG-TSs and merging the data types is shared between the MPEG-TS switch 21 and the Ethernet switch 31 from where sufficient bandwidth to the subscriber is assured.

The Ethernet switches are horizontally connected to a star-type network that might be connected to set-top boxes 40 with a TV-set 41, PCs 5, or other similar end-user equipment. Encoding the video program information in UDP packets for transmission over the Ethernet is managed by the switches 21,31 in a way as is described e.g. in the application GB 2 359 702 A in connection with the network interface unit mentioned therein. However and contrary to said reference, preferably more than one single program is decoupled from the MPEG video data stream. By way of example, 10 programs may be transmitted on a vertical 100 Mbit/s Ethernet line, such that all of them can be scanned at once by partitioning the screen of the end user into sub-windows of which each one has one program associated with.

The set-top box 40 is a traditional MPEG-TS decoder with the exception that its RF input section is replaced with a classical receiver, say 100baseT, and that it is capable of handling the back-conversion from the Ethernet format data frames to MPEG-2 data-bit streams as e.g. described by the encoder in the application US 2002/0007494 A mentioned above. The set-top box further contains all the necessary access modules and pay-cards, leaving it to the end user to provide the necessary hardware for decrypting any restricted programs. Alternatively, in the case where a PC is connected to the horizontal Ethernet network, the TCP/IP-like encoded video signal is not converted to an MPEG format, and the access module could be a built-in extension card with a pay-card slot or the PC could be used to access non-restricted channels only.

The decoding of programs within one MPEG-TS relies upon clock reference timestamps with a resolution of one part in 27.0 MHz. Such timestamps occur at intervals up to 100 ms in a transport stream. If MPEG-TS is embedded within UDP and the packet transmission is irregular, i.e. packets arrive in uneven "clumps", this could lead to decoding problems if the decoder input buffer is small. Thus, the end decoder for demultiplexing and decoding the individual programs - whether it is part of a set-top box or an access-module in a PC - must have a large enough buffer to compensate for such irregularities. However, as the horizontal line is a switched non-shared line only serving one device, this does not pose any problem. Packets being lost will be dealt with by the access module in the same way as in the case of a satellite receiver experiencing fading conditions.

### LIST OF DESIGNATIOINS

- 1: digital satellite distribution system
- 11: satellite antenna
- 12: demodulator bank
- 20: video program streaming channel
- 21,21': demultiplexer, MPEG-TS switch
- 3: digital data network
- 30: vertical backbone network
- 31,31': central data switch, Ethernet switch
- 32,32': star type horizontal network
- 40: set-top box
- 41: TV-set
- 5: Computer

## Claims

1. An arrangement for distributing digital video program information in a building, comprising a digital data network (3) including at least a first and a second central data switch (31,31'), each connected to a star type horizontal network (32,32') and interconnected by a vertical data backbone network (30) of high bandwidth, and a video program streaming channel (20) carrying a multitude of multiplexed and digitally compressed video programs,
**characterized in that** each of the at least two central data switches (31,31') is connected to or has built-in a dedicated demultiplexer (21,21') which is connected to the video program streaming channel (20) and capable of decoupling a limited number of video programs from the streaming channel (20) and transmitting said limited number of video programs to the central data switch (31,31').

2. The arrangement according to claim 1, **characterized in that** the digital data network (3) is an Ethernet and **in that** the digitally compressed video programs are compressed according to the MPEG standard and form MPEG transport streams.

3. The arrangement according to claim 2, **characterized in that** the at least two star type horizontal networks (32,32') are arranged on at least two distinct floors of an office building or hotel.

4. The arrangement according to claim 2, **characterized in that** the star type horizontal networks (32,32') are connected to PCs (5), or to TV-sets (41) via predefined set top electronics (40) capable of decoding said limited number of video programs and converting Ethernet format data frames to MPEG data-bit streams.

5. The arrangement according to claim 4, **characterized in that** said limited number of video programs can be displayed in parallel in distinct sub-windows on a screen of the PC (5) or TV-set (41).
